# EUROPEAN PATENT APPLICATION

(11) **EP 2 110 215 A1**
(43) Date of publication of application: **21.10.2009**
(21) Application number: 09167574.4
(22) Date of filing: 14.10.2005
(51) Int. Cl.: B28B 1/26, B28B 17/00, B29C 33/30

(54) **Support equipment for a die for a pressure die casting machine**

(62) Divisional of application: 05425722.5
(71) Applicant: Garoll S.r.l., 25039 Travagliato (Brescia) (IT)
(72) Inventor: Vianello, Pietro, I-25060, Cellatica, Brescia (IT)
(74) Representative: Chimini, Francesco

(57) **Abstract**

The invention relates to a support equipment for a die for a pressure die casting machine, comprising at least one mounting plate (13) suitable for receiving said die, at least one die holder device (11) suitable for being mounted on said die casting machine for moving said die, and at least one counter plate (14) suitable for being interposed between said mounting plate (13) and said die holder device (11).

## Description

The present invention relates to pressure die casting machines, in particular for manufacturing ceramic products, such as sanitary fixtures. More specifically, the object of the invention is a support equipment for a die for said machines.

The dies used in pressure die casting machines are usually attached to a mounting plate through which they are fitted on a die holder device which is part of the machine. More precisely, a die holder device supports at least a part of a die which once put into contact with another part of die attached to another die holder device, defines the actual die.

For the two or more parts of a die to close perfectly, they must be perfectly aligned when they are fitted on the respective die holder devices. The alignment between the parts of a die usually occurs by adjusting the position of the mounting plate relative to the die holder device.

The need of allowing such adjustment is especially felt in the field of ceramic products as the dies used are made of a micro-porous resin and could therefore exhibit considerable dimensional variances, even in the range of a few millimetres.

Moreover, besides the ducts for introducing the casting material, such dies need to be connected to auxiliary circuits, such as those for compressed air, water, vacuum, etc.

In the practice, the following operations are currently needed to install and/or replace a die on the machine:
- placing the die parts onto respective die holders,
- checking any alignment errors between the die parts,
- carrying out the alignment between said parts, for example through screw systems,
- connecting the pipes of the auxiliary circuits to the die, for example through threaded unions,
- checking the adjustments made through trial manufacturing cycles,
- making any adjustments.

The operations listed above on an average require eight-ten work hours and must be carried out each time a die is fitted on the machine.

The object of the present invention is to provide a support equipment for a die which should allow very quick installation and/or replacement thereof.

Such object is achieved by an equipment according to the appended claims.

To better understand the invention and appreciate its advantages, some exemplary non-limiting embodiments thereof are described below with reference to the annexed drawings, wherein:

figure 1 is a perspective view of a support equipment for a die according to the invention;

figure 2 is a perspective view of the equipment of figure 1 but for supporting two dies;

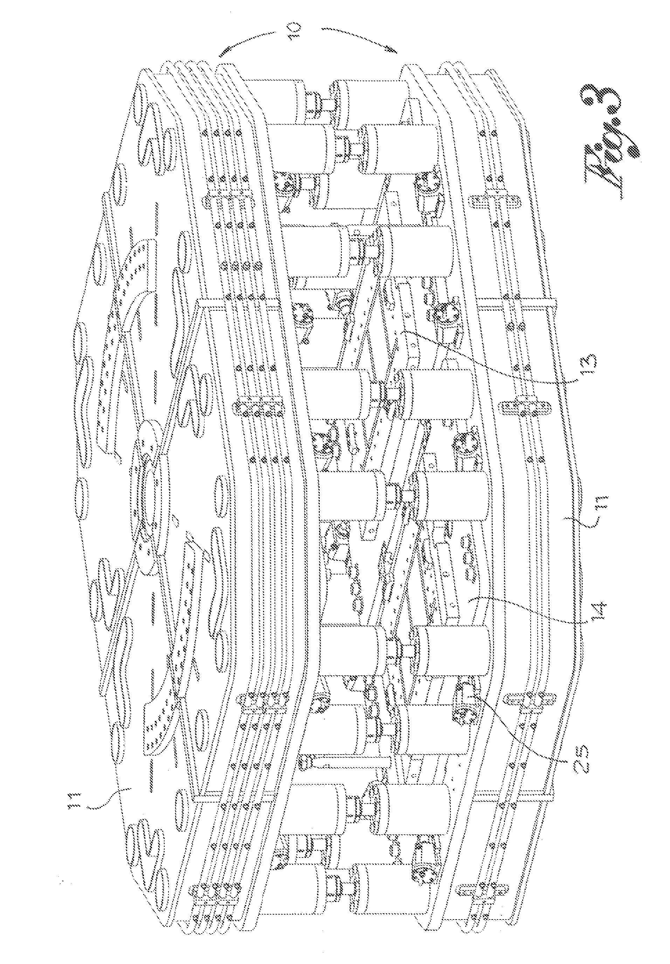

figure 3 shows the equipment of figure 2 with the die holder devices in closed configuration;

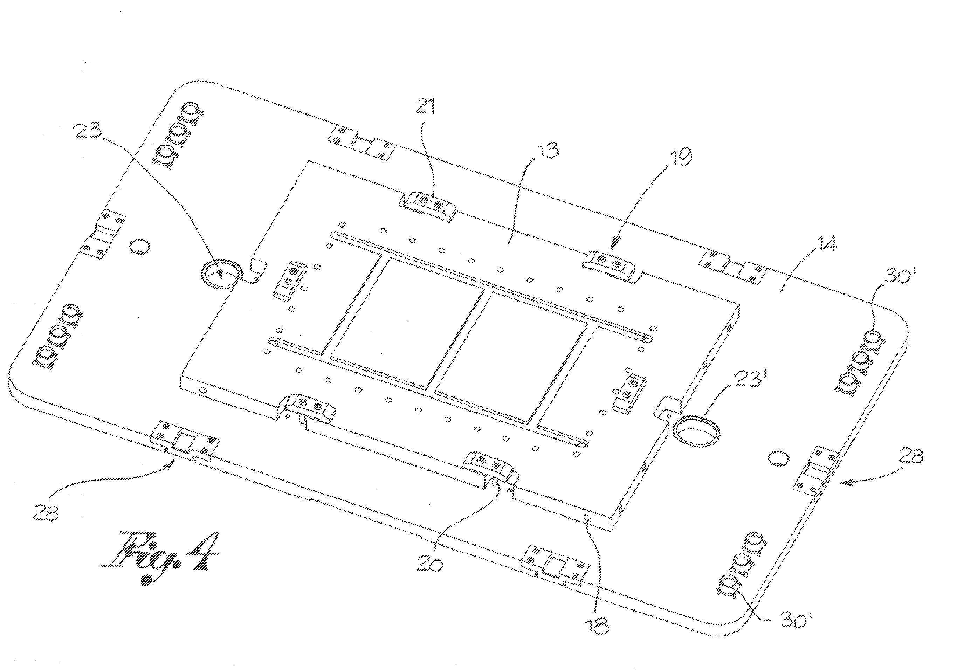

figure 4 shows a perspective view of the mounting plate of a die assembled to a counter plate according to the present invention;

figure 5 is a cutaway view of the support equipment at the level of the means for adjusting the position of the mounting plate relative to the counter plate;

figure 5a shows an enlarged detail of the adjustment means of figure 5;

figure 5b shows a cross section view of the adjustment means of figure 5a;

figure 6 is a cutaway view of the support equipment at the level of the means for locking the counter plate to the die holder device;

figure 7 is a cutaway view of the support equipment at the level of the quick connection unions provided on the die holder device and on the counter plate; and

figure 8 shows a perspective view of a part of two die holder devices and relevant parts of closed dies.

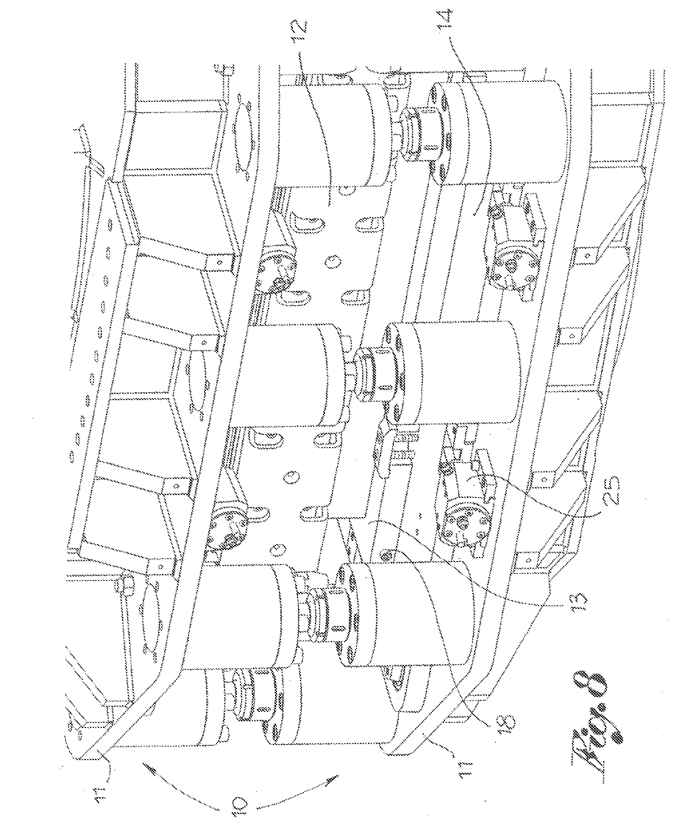

With reference to the figures, reference numeral 10 globally indicates a support equipment for at least one die 12 (shown in figure 8) for a pressure die casting machine, for example for manufacturing ceramic products such as sanitary fixtures.

Said equipment 10 comprises at least one die holder device 11 intended for moving at least one respective die 12. For simplicity of description, in the following description die 12 means a part of a die, or half die, which once coupled with at least one further part of a die, defines a recess intended for being filled with the casting material, for example a ceramic mixture. Die 12 is for example made of a micro-porous resin.

Die 12 is attached, for example by screwing, to a mounting plate 13 suitable for being attached to the die holder device 11.

The idea at the basis of the present invention is to provide for a counter plate 14 suitable for being arranged between the mounting plate 13 and the die holder device 11 so that the mounting plate 13, with the relevant die 12, is attached to said counter plate 14 with the possibility of adjusting the position thereof so that it is aligned with a facing die, while the counter plate 14 is locked to the die holder device 11 in a predetermined fixed position.

The mounting plate 13 and the die holder device 11 are specifically equipped and configured to interface with said counter plate 14 to achieve the object mentioned above. The die holder device 11 modified as described hereinafter, the counter plate 14 and the mounting plate 13, expressly modified as well, make up a new support equipment 10 for die 12 especially suitable for allowing a surprisingly quick assembly and/or replacement thereof.

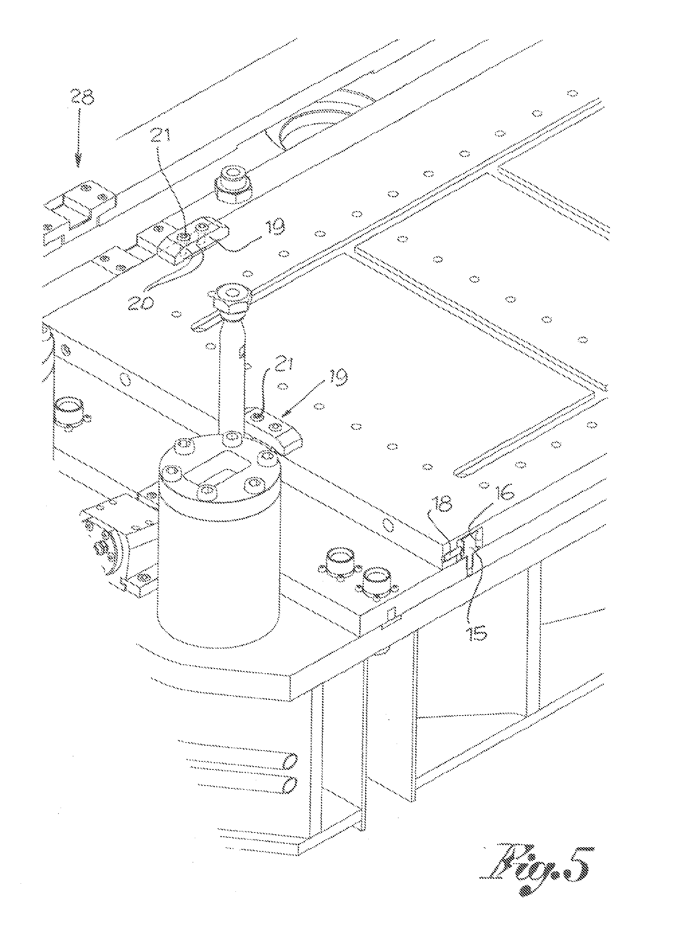

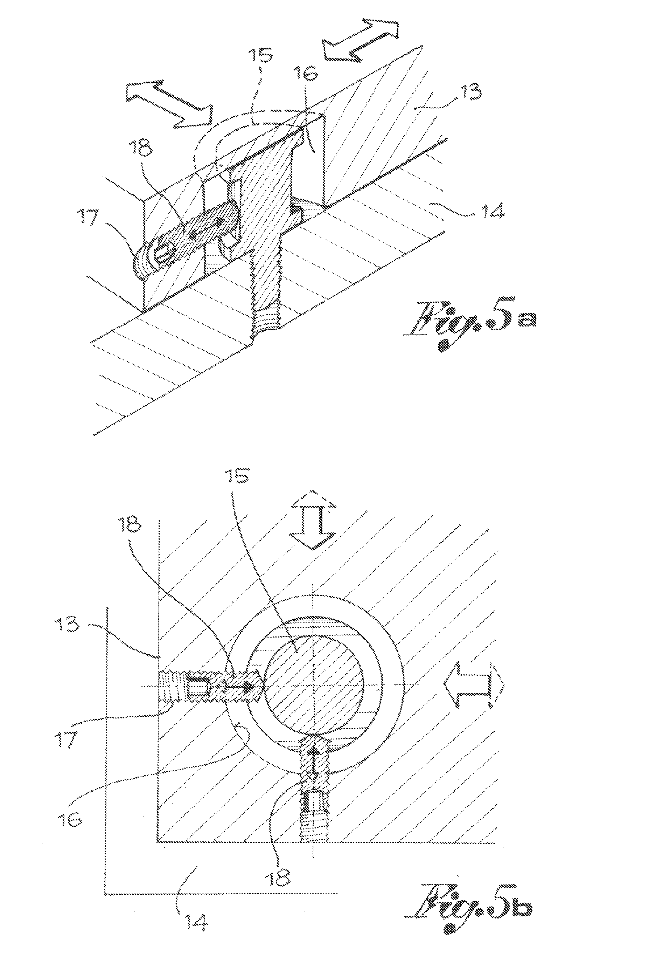

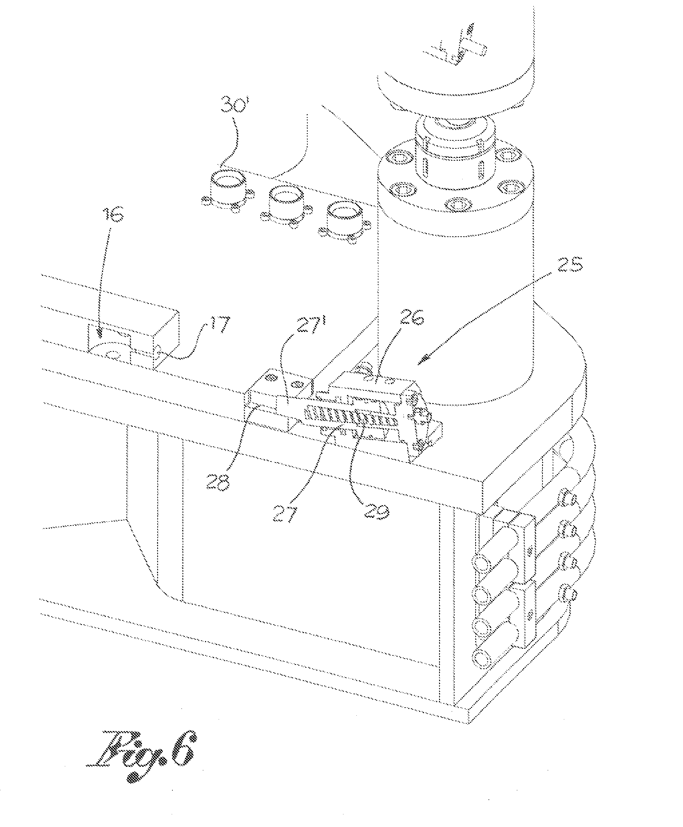

In accordance with an embodiment, a plurality of abutment pins 15, for example mushroom shaped, extends from the counter plate 14. Correspondingly, in the mounting plate 13 there is obtained a plurality of seats 16 (figures 5 and 6), each suitable for seating with clearance a respective abutment pin 15. Seating with clearance means that the width of seat 16 is considerably larger than the section of the abutment pin 15. For example, considering a pin 15 with a round head, seat 16 exhibits a diameter of even a few millimetres greater than the diameter of said head. Said seats 16 are for example shaped as blind holes opened towards the counter plate 14, that is, at the side opposite die 12.

Each of said seats 16 communicates with at least one threaded hole 17 wherein there is screwed an adjustment dowel 18 suitable for transversally engaging a respective abutment pin 15 for adjusting the position of the mounting plate 13 relative to the counter plate 14.

Advantageously, the abutment pins 15 and seats 16 are provided at a peripheral position in the respective counter plate 14 and mounting plate 13, so that the adjustment dowels 18 are accessible from the side surfaces of the mounting plate 13.

Preferably, the mounting plate 13 has a rectangular shape, seats 16 for the abutment pins 15 being provided in the proximity of the vertexes. Advantageously, therefore, each pin is associated with two adjustment dowels 18 orthogonal to one another.

Even though the connection between the adjustment dowels 18 and the abutment pins 15 could be suitable, besides the adjustment of the position of the mounting plate 13 relative to the counter plate 14, also for allowing the lock of the first to the second one, a particularly advantageous embodiment of the equipment according to the present invention provides for the use of special locking brackets 19 suitable for being attached to the counter plate 14 for holding the mounting plate 13 in abutment with said counter plate 14. More in detail, each of said brackets comprises at least one threaded stem 20, preferably two, suitable for being screwed to the counter plate, and a head 21 suitable for abutting on the face of the mounting plate 13 opposite the counter plate 14.

In other words, once the position of the mounting plate 13 has been adjusted, for example through the adjustment dowels 18, said mounting plate is firmly locked in the selected position screwing the locking brackets 19 thoroughly to the counter plate until the mounting plate is firmly abutted on said counter plate.

Advantageously, said locking brackets 19 are positioned so as to act on the edges of the mounting plate 13.

To connect the counter plate 14 to the die holder device 11, the latter is provided with a plurality of centring pins 22 suitable for inserting with a geometrical coupling into respective openings 23 obtained in the counter plate 14.

By insertion with geometrical coupling it is meant that the pins are very precisely inserted into the openings of the counter plate, that is, without any clearance. In fact, the counter plate 14 must be mountable on the die holder device 11 always in the same position.

To this end, to limit the wear and thus always ensure the same positioning of the counter plate, the surfaces thereof that delimit openings 23 are advantageously coated with a bushing 23' of hardened steel.

Advantageously, openings 23 are obtained in a peripheral position in the counter plate 14.

According to an embodiment, also the counter plate 14 exhibits a rectangular shape.

To lock the counter plate 14 to the die holder device 11, a plurality of quick cylinder bracketing units 25 is fitted on the latter.

Each of said units 25 exhibits a body 26 attached in peripheral position on the die holder device 11 and a stem 27 facing inside said die holder device 11 and suitable for engaging the counter plate 14. The quick bracketing units 25, whose number depends on the size of the die, are arranged around the counter plate 14.

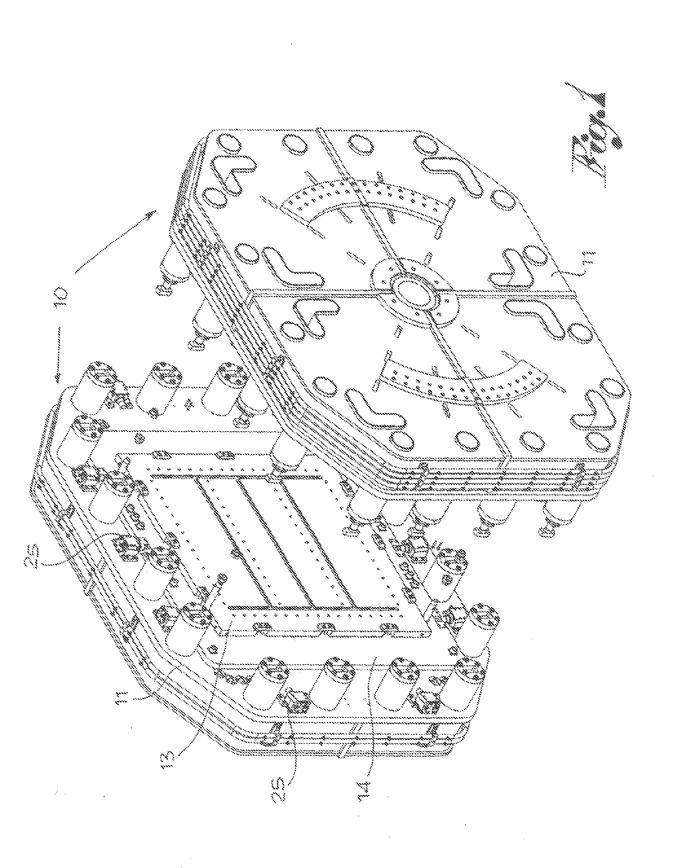

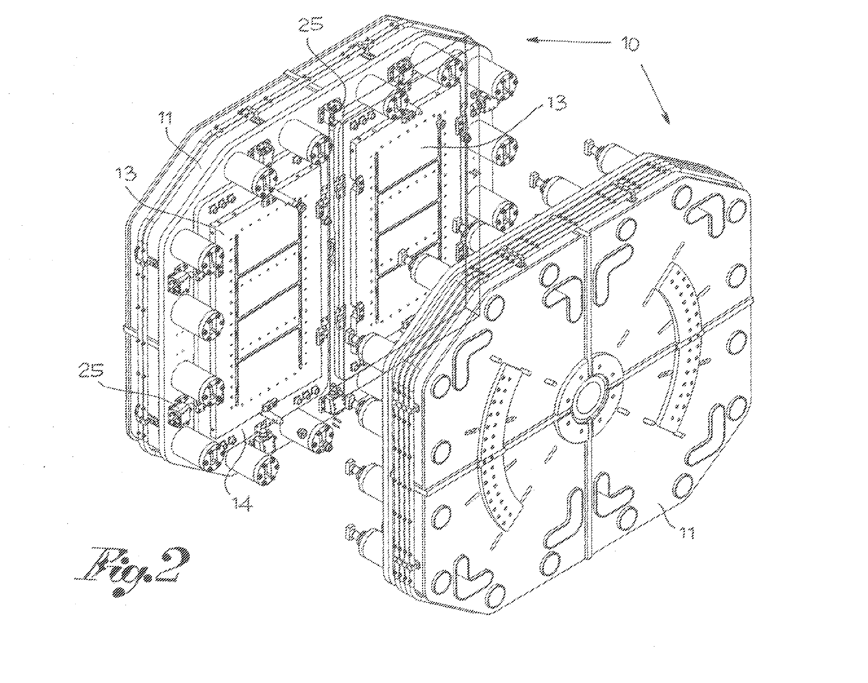

Figure 2 shows the same die holder device 11 of figure 1, but with two counter plates 14 for respective dies mounted thereon. The number and arrangement of the quick bracketing units 25 allows locking a single or both the counter plates 14.

In accordance with a preferred embodiment, stem 27 of said units 25 is movable along an inclined direction relative to the plane defined by the counter plate 14, in particular from top to the bottom, so as to generate a binding action between said stem 27 and said counter plate 14. In other words, the force with which stem 27 incises the counter plate 14 can be decomposed into an orthogonal component and into a parallel component relative to the counter plate 14. In this way, whatever the position of the die holder device 11, stem 27 can never move back due to the weight of the counter plate 14. Moreover, advantageously, each stem 27 exhibits a flat head 27' for the abutment on the counter plate 14.

In accordance with an advantageous embodiment, in the counter plate 14 there are provided special abutment seats 28 for the head of stem 27. Preferably, each seat 28 is coated with a hardened steel block.

According to a preferred embodiment, the quick bracketing units 25 are hydraulically actuated, for example double effect. Advantageously, stem 27 is normally further kept in an advanced locking position of the counter plate 14 by an elastic means 29, such as a helical spring with rectangular section.

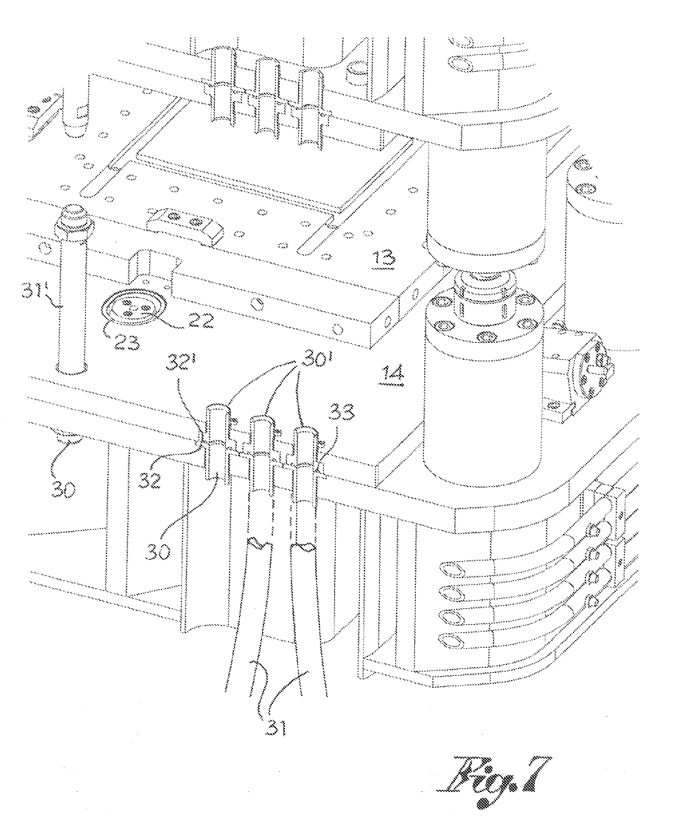

According to a further aspect of the invention (in particular, figure 7), the die holder device 11 is provided with quick connection unions 30 to pipes 31 of auxiliary circuits, for example of compressed air, water, vacuum, to be connected to the die and coming from the pressure die casting machine. In particular, said unions 30 exhibit the end of connection to pipes 31 facing the side opposite the counter plate 14.

Similarly, also the counter plate 14 is provided with quick connection unions 30' for pipes 31' of auxiliary circuits to be connected to the die. In particular, unions 30' in the counter plate 14 exhibit the end of connection to pipes 31' facing the die.

Advantageously, unions 30 of the die holder device and unions 30' of the counter plate are provided in such positions as to be in fluid communication when the counter plate 14 is mounted on the die holder device 11. Even more advantageously, said unions 30, 30' exhibit facing flat surfaces 32, 32' suitable for being placed one against the other with the interposition of at least one sealing element 33. In this way, the connection between pipes 31 coming from the machine and pipes 31' connected to the die is obtained by simply abutting the counter plate 14 on the die holder device 11. The two annular flat surfaces 32, 32' and the sealing element interposed thereinbetween 33 ensure the front seal of the connection.

It should be noted that even in the case of a non-prefect alignment between unions 30 and 30', the fluid passage and the connection seal are ensured.

Finally, it should be noted that the counter plate 14, for example made of aluminium, exhibits a greater extension than the mounting plate 13 since it needs a free peripheral portion on which the stems of the quick bracketing units 25 act and carrying the quick connection unions 30' to the pipes of the auxiliary circuits.

To mount a new die on the die holder device 11, the die is attached to the mounting plate 13 both mechanically, for example by screwing, and in fluid connection, by connecting pipes 31' on one side to special unions provided in the die and on the other side to the quick connection unions 30' provided in the mounting plate 13. The latter is then constrained to the counter plate 14. The counter plate 14 is then mounted on the die holder device 11 in a precise and predetermined position given by the centring means between the two devices. The locking of the counter plate 14 occurs by actuating the quick bracketing units 25. At this point, the position of the mounting plate 13 is adjusted relative to the counter plate through the adjustment means described above, that is, by manually turning the adjustment dowels 18.

Once the part of die on the mounting plate 13 is aligned with the corresponding part of die on the machine, the mounting plate 13 is locked into position by the fixing brackets 19.

It should be noted that the mechanical connection between the counter plate 14 and the die holder device 11 also realises the fluid connection of the auxiliary circuits.

When it is necessary to remove the die from the machine, it is sufficient to release the quick bracketing units 25; at the same time, and without any additional operation, also pipes 31 connected to the die holder device 11 and pipes 31' connected to the counter plate 14 are disconnected from one another. The set of counter plate 14, mounting plate 13 and die is removed from the machine without influencing the relative position between the mounting plate and the counter plate. The die and the relevant mounting plate are then stored connected to the counter plate 14. In other words, after the die and the relevant mounting plate 13 are associated a first time to the counter plate 14, the latter becomes an integral part of the die for the next usages. In particular, the adjustment of the position of the mounting plate 13 carried out the first time is kept unchanged for the entire life of the die.

Every time the die must be placed in the machine again, it is therefore sufficient to attach the counter plate 14 to the die holder device 11. Since the counter plate 14 is mounted on said device always in the same position thanks to the centring means, the die is automatically and immediately reinstalled in the same position decided upon the first installation.

It is evident that a man skilled in the art may make several changes and adjustments to the die changing equipment according to the present invention in order to meet specific and incidental needs, all falling within the scope of protection of the invention as defined in the following claims.

## Claims

1. A support equipment (10) for a die (12) for a pressure die casting machine, comprising:
- at least one mounting plate (13) suitable for receiving said die,
- at least one die holder device (11) suitable for being fitted onto said machine for moving said die, and
- at least one counter plate (14) suitable for being arranged between the mounting plate (13) and the die holder device (11) so that the mounting plate (13) is attached to said counter plate (14) with the possibility of adjusting the position of the mounting plate (13) so that it is aligned with a facing die, while the counter plate (14) is mounted on the die holder device (11) in a predetermined fixed position.

2. An equipment according to claim 1, wherein a plurality of abutment pins (15) extends from the counter plate and wherein in said mounting plate there is obtained a plurality of seats (16) suitable for seating with clearance respective abutment pins, each of said seats being associated to at least one adjustment dowels (18) suitable for transversally engaging in a respective abutment pin for adjusting the position of the mounting plate relative to the counter plate.

3. An equipment according to claim 2 or 3, wherein said abutment pins and said seats are provided at a peripheral position in the respective counter plate and mounting plate, the adjustment dowels being accessible from the side surfaces of the mounting plate.

4. An equipment according to claims 2 or 3, wherein each seat is associated to two adjustment dowels orthogonal to one another.

5. An equipment according to any one of the previous claims, comprising a plurality of locking brackets (19) suitable for being constrained to the counter plate (14) for holding the mounting plate (13) in abutment on said counter plate (14).

6. An equipment according to any one of the previous claims, wherein the die holder device (11) is provided with a plurality of centring pins (22), and wherein the counter plate exhibits a plurality of openings (23) suitable for geometrically connecting to said centring pins.

7. An equipment according to any one of the previous claims, comprising a plurality of cylinder bracketing units (25), each unit having a body (26) attached to the die holder device and a stem (27) engaging in the counter plate (14).

8. An equipment according to claim 7, wherein said stem is movable along an inclined direction relative to the plane defined by the counter plate, so as to generate a binding action between said stem and said counter plate.

9. An equipment according to claim 8, wherein the stem of said cylinder bracketing units is normally kept in advanced bracketing position by an elastic means.

10. An equipment according to any one of the previous claims, wherein the die holder device is provided with quick connection unions (30) to pipes (31) of auxiliary circuits to be connected to the die coming from the pressure die casting machine.

11. An equipment according to any one of the previous claims, wherein the counter plate is provided with quick connection unions (30') to pipes (31') of auxiliary circuits to be connected to the die.

12. An equipment according to claims 10 and 11, wherein the unions of the die holder device and the unions of the counter plate are provided in such positions as to be in fluid communication when the counter plate is mounted on the die holder device.

13. An equipment according to claim 12, wherein the unions of the die holder device and the unions of the counter plate exhibit facing flat surfaces (32, 32') suitable for being placed one against the other with the interposition of at least one sealing element (33).

14. A pressure die casting machine comprising at least a support equipment (10) for a die (12) according to anyone of the previous claims.

15. A method for adjusting the position of a mounting plate (13) of a die (12) on a die holder device (11) of a pressure die casting machine, comprising the steps of:
- providing a counter plate (14) suitable for being arranged between the mounting plate (13) and the die holder device (11);
- mounting the counter plate (14) on the die holder device (11) in a precise and predetermined position;
- adjusting the position of the mounting plate (13) relative to the counter plate so that the mounting plate (13), with the relevant die (12), is aligned with a facing die;
- locking the mounting plate to the counter plate in the desired position.
